# EUROPEAN PATENT SPECIFICATION

(11) **EP 4 059 360 B1**
(45) Date of publication and mention of the grant of the patent: **14.02.2024**
(21) Application number: 20893146.9
(22) Date of filing: 16.11.2020
(51) Int. Cl.: A24B 15/24, A24B 3/12

(54) **METHOD FOR PREPARING TAR EXTRACT FROM DISCARDED CIGARETTE BUTTS AND APPLICATION THEREOF IN CIGARETTES**
VERFAHREN ZUR HERSTELLUNG VON TEEREXTRAKT AUS ZIGARETTENSTUMMELN UND DEREN VERWENDUNG IN ZIGARETTEN
PROCÉDÉ DE PRÉPARATION D'EXTRAIT DE GOUDRON À PARTIR DE MÉGOTS DE CIGARETTES MIS AU REBUT ET SON APPLICATION DANS DES CIGARETTES

(30) Priority: 27.11.2019 CN 201911179717
(43) Date of publication of application: 21.09.2022
(73) Proprietor: Inner Mongolia Kunming Cigarette Co., Ltd., Hohhot, Inner Mongolia 010020 (CN)
(72) Inventor: LI, Liqun, Hohhot, Inner Mongolia 010020 (CN); GUO, Chunsheng, Hohhot, Inner Mongolia 010020 (CN); JI, Xudong, Hohhot, Inner Mongolia 010020 (CN); ZHANG, Junsong, Hohhot, Inner Mongolia 010020 (CN); CHEN, Chen, Hohhot, Inner Mongolia 010020 (CN); YE, Yajun, Hohhot, Inner Mongolia 010020 (CN); HAO, Jie, Hohhot, Inner Mongolia 010020 (CN); WANG, Xudong, Hohhot, Inner Mongolia 010020 (CN); QIAO, Yuemei, Hohhot, Inner Mongolia 010020 (CN); LI, Ruili, Hohhot, Inner Mongolia 010020 (CN); LIANG, Miao, Hohhot, Inner Mongolia 010020 (CN); ZHANG, Wenjie, Hohhot, Inner Mongolia 010020 (CN)
(74) Representative: Huang, Liwei
(86) International application number: PCT/CN2020/129088
(87) International publication number: WO 2021/104080

(56) References cited:
- WO-A1-2017/181684
- CN-A- 1 056 910
- CN-A- 102 161 611
- CN-A- 110 041 303
- CN-A- 110 236 231
- CN-A- 111 035 057
- US-A1- 2015 201 669
- Huang Dengfeng: "Studies on Recycling and Use of the Cigarette Butts", Chinese Master s Theses Full-Text Database, Engineering Science and Technology I, 1 June 2012 (2012-06-01), XP055814492,

## Description

### Field

The present invention relates to a use of tar extract from a discarded cigarette butt in a cigarette, belonging to the technical field of tobacco technology.

### Background

A cigarette is a tobacco product in which a tobacco blend is rolled into strips with cigarette paper. The cigarette is mainly composed of a tobacco blend, cigarette paper, tipping paper and a filter. The cigarette paper (also known as bobbin paper) is special paper used for wrapping the tobacco blend. The tipping paper (also known as cork paper bobbin) is special paper used for uniting a tobacco rod with the filter. The tipping paper and the filter section make up a cigarette butt. The cigarette butt is a residual part of a cigarette after smoking. The cigarette butt is composed of outer wrapping paper and an inner fiber tow. The fiber tow of the cigarette butt has an adsorption capacity and can effectively trap tar and other harmful particles in the smoke.

China consumes a large number of cigarettes every year, and then a large number of discarded cigarette butts are produced, causing great pollution to the environment. The discarded cigarette butts contain a large amount of tar. Cigarette tar contains not only aroma components that have a positive effect on sensory quality, such as ketones, furans and pyrazines, but also nicotine that can improve consumers' physiological satisfaction, and harmful substances that have an obvious negative effect on sensory quality, such as amines and aldehydes. Therefore, it is of great significance to extract tar in the discarded cigarette butts and prepare an extract with certain properties or effects.

CN109959649A discloses a cigarette tar extract with chemiluminescent properties. A method of preparing the cigarette tar extract includes the step of: adding cigarette tar to a reagent for extraction to obtain the cigarette tar extract. The cigarette tar may be obtained by the following steps: smoking a cigarette, filtering the generated smoke, and collecting smoke particulate matters to obtain the cigarette tar. The cigarette tar extract in this patent is obtained by ultrasound-assisted extraction in an open system under natural light conditions, so a luminescent substance contained has stable properties and are insensitive to light, oxygen and temperature, etc. This extract has a wide luminescence response range for pH of a medium, and is capable of being subjected to a chemiluminescent reaction under acidic, neutral or alkaline conditions. In this patent, the cigarette tar is the tar in the smoke particulate matters, and the prepared tar extract is luminescent, so this patent does not involve extraction of tar in the discarded cigarette butt to obtain the extract with aroma characteristics.

CN102559388A discloses a tobacco essential oil and a method for preparing the same, and use of the tobacco essential oil in cigarettes. The tobacco essential oil is prepared by the following method including: taking discarded/defective tobacco wastes, carrying out extraction with an organic solvent, obtaining a crude extract of essential oil, introducing water vapor, carrying out condensation, and separating oil and water to obtain the tobacco essential oil. In this patent, the tobacco essential oil is added to a cigarette tobacco blend as an aroma enhancer, and can enhance the original aroma of tobacco, improve the aroma quality and quantity of cigarettes, reduce the irritancy and offensive odor of the tobacco and soften the smoke. The discarded/defective tobacco wastes produced in the cigarette production process, which are used as a raw material, are free of tar, so this patent does not involve an extraction process for the discarded cigarette butt.

Some other prior arts regarding extracting cigarette butts can be seen in CN 102161611A, CN 110236231 A, and Huang Dengfeng: "Studies on Recycling and Use of the Cigarette Butts", Chinese Master s Theses Full-Text Database, Engineering Science and Technology I, 1 June 2012 (2012-06-01).

### Summary

The invention is set out in the appended set of claims.

The present invention aims to provide a method for preparing a tar extract from a discarded cigarette butt and use of the tar extract in a cigarette. By using the discarded cigarette butt as a raw material, microwave-assisted extraction and separation by silica gel column chromatography are used to obtain the tar extract with aroma characteristics, and the obtained tar extract is applied to the cigarette to enhance the aroma of the cigarette.

In the present invention, the discarded cigarette butt used as a raw material is discarded by people on the roadside or in an ashtray, so the method has the advantages of wide raw material sources and low cost. A yellow cigarette butt is selected due to its higher tar content.

The present invention provides a method for preparing a tar extract from a discarded cigarette butt, including the following steps:
(1) adding the discarded cigarette butt to an extraction solvent, and carrying out microwave-assisted extraction to obtain an extraction solution; and
(2) centrifuging the extraction solution, carrying out silica gel column chromatography on the supernatant, carrying out elution by using a mixed solution of petroleum ether and ethyl acetate as a mobile phase, and collecting the resulting elution fraction to obtain the tar extract.

Further, in the step (1), the extraction solvent is at least one selected from methanol, anhydrous ethanol, petroleum ether, n-hexane, acetone, dichloromethane and ethyl acetate.

Preferably, a ratio of the discarded cigarette butt to the extraction solvent is 1 g:5-30 mL, a microwave-assisted extraction power is 40-400 W, and the microwave-assisted extraction is carried out for 3-10 min. Preferably, the microwave-assisted extraction power is 50-200 W, a lower limit of the microwave-assisted extraction power is selected from 60 W, 70 W, 80 W, 90 W, 100 W, 110 W, 120 W, 130 W, 140 W, 150 W, 160 W, 170 W, 180 W or 190 W, and an upper limit of the microwave-assisted extraction power is selected from 60 W, 70 W, 80 W, 90 W, 100 W, 110 W, 120 W, 130 W, 140 W, 150 W, 160 W, 170 W, 180 W or 190 W. More preferably, the microwave-assisted extraction is carried out for 4-9 min, a lower limit of the microwave-assisted extraction time is selected from 5 min, 6 min, 7 min or 8 min, and an upper limit of the microwave-assisted extraction time is selected from 5 min, 6 min, 7 min or 8 min.

Further, in the step (2), a volume ratio of petroleum ether to ethyl acetate in the mixed solution of petroleum ether and ethyl acetate is 2-30: 1 (v/v).

The centrifuging is carried out at a revolution speed of 500-2000 r/min for 1-3 min.

Further, the method further includes the steps of carrying out vacuum distillation on the collected elution fraction, and carrying out vacuum drying.

Preferably, the vacuum distillation is carried out at a temperature of 30-50°C under a pressure of 0.1-5 mmH; and the drying is carried out at a temperature of 100-150°C.

Further, the method further includes a step of pretreating the discarded cigarette butt.

Preferably, the pretreating specifically includes: tearing off outer wrapping paper from the discarded cigarette butt, and cutting a tow into small segments with a length of less than 1 cm.

The present invention thus obtains a tar extract prepared by the method.

The present invention provides use of the tar extract as a raw material of a flavor or in the preparation of a flavor.

In yet another aspect, the present invention further provides use of the tar extract in the preparation of a cigarette.

Preferably, the cigarette is a low-end cigarette.

Preferably, the tar extract is added to a filter or a tobacco blend of the cigarette. Preferably, the amount of the tar extract added is 2-5% of the weight of the cigarette tobacco blend.

The present invention has the following beneficial effects:
(1) Through the microwave-assisted extraction and separation by the silica gel column chromatography, harmful substances in the tar of the cigarette butt are removed, and the components with aroma characteristics are retained, and the tar extract is applied to the low-end cigarette to improve the aroma, smoke and taste characteristics of the low-end cigarette and also improve the sensory quality of the low-end cigarette, thereby increasing the use proportion of inferior tobacco leaves in the cigarette or widening the use ways of the inferior tobacco leaves, and providing ideas and technical support for reducing the inventory pressure of the inferior tobacco leaves.
(2) By optimizing the conditions of the microwave-assisted extraction and separation by the silica gel column chromatography, the tar extract is extracted from the cigarette butt at a higher yield. The discarded cigarette butt is used as the raw material, which can not only avoid the cigarette butt from polluting the environment, but also make use of a byproduct tar after smoking the cigarette.

### Detailed Description of the Embodiments

The present invention will be described in detail in conjunction with specific examples. The following examples are only explanations for those skilled in the art to understand the technical solution of the present invention and to realize or use the present invention, and are not intended to limit the protection range of the present invention.

Unless otherwise specified, the raw materials and equipment used in the present invention are those available from the market or commonly used in the art.

The methods in the examples, unless otherwise specified, are conventional methods in the art.

### Example 1

A method for preparing a tar extract from a discarded cigarette butt included the following steps:
(1) pretreating of the discarded cigarette butt: outer wrapping paper of the discarded cigarette butt was removed, and a tow was cut into small segments with a length of less than 1 cm;
(2) 100 g of the pretreated discarded cigarette butt was added to 1 L of petroleum ether, and microwave irradiation was carried out with a microwave-assisted extraction power of 80 W for 5 min to obtain an extraction solution;
(3) the extraction solution was centrifuged at 1200 r/min for 2 min, the supernatant was allowed to pass through a silica gel column, elution was carried out by using a mixed solution of petroleum ether and ethyl acetate (a volume ratio of petroleum ether to ethyl acetate was 20: 1) as a mobile phase, and the resulting elution fraction was collected; and
(4) vacuum distillation was carried out on the elution fraction at 45°C under a vacuum pressure of 1 mmH, and then vacuum drying was carried out at 120°C to obtain the tar extract.

The tar extract was detected by GC/MS. Main components in the tar extract were furfural, furfuryl alcohol, ethylene glycol diacetate, 1-(1,3-dioxolan-2-yl)acetone, 4-cyclopentene-1,3-dione, methylcyclopentenolone, nicotine, 2-acetylfuran, 2(5H)-furanone, 5-methylfurfural, 3-methyl-2-cyclopenten-1-one, methylcyclopentenolone, benzyl alcohol, 2,3-dimethyl-2-cyclopentenone, ethylcyclopentenolone, 5 -hydroxym ethyl furfural, vanillin, megastigmatrienone A, 2,4,4-trimethylpentane-1,3-diyl bis(2-methylpropionate), farnesol, phthalic acid 1-butyl 2-isobutyl ester, scopoletin and tributyl prop-1-ene-1,2,3-tricarboxylate.

GC/MS conditions:
HP 6890/5973 GC-MS
(1) GC conditions:
   Chromatographic column: LTLTRA2 (50m×0.2mm i.d×0.33µm d.f.)
   Detector: MS
   Carrier gas, flow rate: He, 0.6 ml/min
   Temperature of injection port: 290°C
   Temperature program: 80°C (1 min) 2°C/min→280°C (10 min)
   Split ratio, injection volume: 1:10, 2µl
   (2) Conditions of GC/MS:
   GC conditions: the same as above
   Temperature of transfer line: 230°C
   Temperature of ion source: 230°C
   Ionization energy: 70 eV
   Mass range: 30-350 u
   Carrier gas: He
   MS spectra: NIST Library

### Example 2 Use of tar extract in cigarette

The tar extract prepared in Example 1 was added to a cigarette tobacco blend in an amount of 3% of the weight of the cigarette tobacco blend to prepare a cigarette sample 1.

The tar extract prepared in Example 1 was added to a cigarette tobacco blend in an amount of 5% of the weight of the cigarette tobacco blend to prepare a cigarette sample 2.

The tar extract prepared in Example 1 was added to a cigarette tobacco blend in an amount of 2% of the weight of the cigarette tobacco blend to prepare a cigarette sample 3.

After the cigarette samples prepared by the above solution and a cigarette without the tar extract were equilibrated in a constant-temperature and constant-humidity environment of (20±1)°C and (60±3)%RH for 24 h, 10 or more smoking evaluators were organized to perform sensory evaluation on the cigarette samples with reference to Tobacco in processing-Sensory evaluation methods (YC/T 415-2011). The evaluation results are shown in Table 1.

**Table 1 Sensory evaluation results**

| Evaluation sample | | Control sample | Sample 1 | Sample 2 | Sample 3 |
|---|---|---|---|---|---|
| Aroma characteristic s | Quality of aroma | 6.0 | 6.25 | 6.50 | 6.50 |
| | Quantity of aroma | 6.0 | 6.30 | 6.50 | 6.50 |
| | Offensive odor | 6.0 | 6.25 | 6.50 | 6.50 |
| | Volatility | 5.5 | 6.00 | 5.65 | 6.00 |
| Smoke characteristic s | Concentration | 6.0 | 6.25 | 6.25 | 6.50 |
| | Strength | 5.5 | 5.80 | 5.80 | 5.80 |
| | Harshness | 5.5 | 5.80 | 6.00 | 6.00 |
| | Agglomeration | 5.5 | 5.50 | 5.80 | 6.00 |
| Taste characteristic s | Irritancy | 5.5 | 6.00 | 6.00 | 6.00 |
| | Dry feeling | 5.5 | 5.75 | 6.00 | 6.00 |
| | Clean degree | 5.5 | 5.5 | 5.75 | 5.75 |
| | Sweet aftertaste | 4.0 | 5.0 | 5.0 | 5.0 |

As shown in Table 1, compared with the control group, after the tar extract prepared in the example of the present invention was added, the aroma characteristics of the cigarettes changed greatly, among which the scores of the quality of aroma, the quantity of aroma, the offensive odor and the volatility were increased to different degrees, showing obvious improvement effects. Among the smoke characteristics, the concentration and the strength were slightly increased, and the harshness and the agglomeration of the smoke were improved. Among the taste characteristics, the sweet aftertaste was increased, the moist feeling was increased, the dry feeling was decreased, the irritancy was reduced significantly. As a result, the smoke, aroma and taste characteristics of the low-end cigarette were effectively improved, and the sensory quality of the low-end cigarette was improved.

### Example 3 Selection of conditions for preparation method

### 1. Selection of extraction solvent

Methanol, dichloromethane, anhydrous ethanol, glycerin, petroleum ether and polyethylene glycol 400 were respectively used to carry out extraction by microwave irradiation on the pretreated discarded cigarette butt, wherein a ratio of material to liquid was 1:10 (g/mL), and the extraction by microwave irradiation was carried out once with a microwave-assisted extraction power of 80 W for 5 min. The effects of different solvents on extraction effects (the amounts of components extracted from per g of cigarette butt) were compared and analyzed. The detection results of the extraction solutions are shown in Table 2. As can be seen from Table 2, the anhydrous ethanol had the best extraction effects.

**Table 2 Extraction effects of different organic solvents (mg/g)**

| No. | Holding time/min | Component | Extraction solvent | | | | | |
|---|---|---|---|---|---|---|---|---|
| | | | Methanol | Dichloro methane | Anhydrous ethanol | Glycerin | Petroleu m ether | Polyethylene glycol 400 |
| 1 | 11.087 | Furfural | 0.97 | 0.93 | 1.08 | 0.47 | 0.94 | 0.41 |
| 2 | 11.963 | Furfuryl alcohol | 1.01 | 0.99 | 1.15 | 0.53 | 0.88 | 0.38 |
| 3 | 12.428 | Ethylene glycol diacetate | 0.50 | 0.49 | 0.53 | 0.25 | 0.43 | 0.24 |
| 4 | 13.016 | 1-(1,3-dioxolan-2-yl)acetone | 0.48 | 0.51 | 0.53 | 0.21 | 0.47 | 0.26 |
| 5 | 13.258 | 4-cyclopentene-1,3-dione | 0.47 | 0.42 | 0.51 | 0.2 | 0.39 | 0.21 |
| 6 | 14.240 | Methylcyclopen tenolone | 0.46 | 0.40 | 0.46 | 0.21 | 2.09 | 0.19 |
| 7 | 14.406 | Nicotine | 2.27 | 2.20 | 2.36 | 1.12 | 2.06 | 0.77 |
| 8 | 14.446 | 2-acetylfuran | 0.23 | 0.24 | 0.30 | 0.14 | 0.26 | 0.14 |
| 9 | 14.646 | 2(5H)-furanone | 0.34 | 0.39 | 0.42 | 0.17 | 0.40 | 0.18 |
| 10 | 16.934 | 5-methylfurfural | 1.47 | 1.50 | 1.60 | 0.73 | 1.44 | 0.63 |
| 11 | 17.051 | 3-methyl-2-cycl openten-1-one | 0.81 | 0.77 | 0.94 | 0.41 | 0.79 | 0.35 |
| 12 | 20.257 | Methylcyclopen tenolone | 1.47 | 1.51 | 1.71 | 0.69 | 1.47 | 0.62 |
| 13 | 20.545 | Benzyl alcohol | 0.44 | 0.41 | 0.48 | 0.22 | 0.40 | 0.21 |
| 14 | 20.745 | 2,3-dimethyl-2-cyclopentenone | 1.18 | 1.05 | 1.25 | 0.62 | 1.08 | 0.48 |
| 15 | 24.792 | Ethylcyclopente nolone | 0.50 | 0.44 | 0.54 | 0.23 | 0.41 | 0.23 |
| 16 | 30.262 | 5-hydroxymethy lfurfural | 1.25 | 1.20 | 1.30 | 0.55 | 1.18 | 0.44 |
| 17 | 37.938 | Vanillin | 0.68 | 0.69 | 0.73 | 0.35 | 0.67 | 0.32 |
| 18 | 45.367 | Megastigmatrie none A | 0.99 | 0.85 | 1.03 | 0.49 | 0.91 | 0.42 |
| 19 | 45.820 | 2,4,4-trimethylp entane-1,3-diyl bis(2-methylpro pionate) | 0.53 | 0.49 | 0.58 | 0.29 | 0.54 | 0.28 |
| 20 | 56.972 | Farnesol | 0.45 | 0.42 | 0.51 | 0.25 | 0.45 | 0.25 |
| 21 | 58.684 | Phthalic acid 1-butyl 2-isobutyl ester | 0.69 | 0.76 | 0.77 | 0.36 | 0.71 | 0.34 |
| 22 | 59.096 | Scopoletin | 0.52 | 0.60 | 0.61 | 0.29 | 0.60 | 0.28 |
| 23 | 64.684 | Tributyl prop-1-ene-1,2, 3-tricarboxylate | 0.53 | 0.61 | 0.60 | 0.28 | 0.59 | 0.24 |
| Total amount | | | 18.25 | 17.87 | 19.99 | 9.06 | 19.15 | 7.87 |

### 2. Selection of microwave radiation time

100 g of the pretreated discarded cigarette butt was added to 1 L of anhydrous ethanol, microwave-assisted extraction was carried out by respectively microwave radiation for 1, 3, 5, 9 and 12 min, and the extraction effects were tested. The detection results are shown in Table 3. As can be seen from Table 3, the extraction effect was best under microwave irradiation for 5 min.

**Table 3 Extraction effects of different microwave radiation times (mg/g)**

| No. | Holding time | Component | Extraction time | | | | |
|---|---|---|---|---|---|---|---|
| | | | 1min | 3min | 5min | 9min | 12min |
| 1 | 11.087 | Furfural | 0.74 | 0.85 | 1.08 | 1.05 | 0.65 |
| 2 | 11.963 | Furfuryl alcohol | 0.78 | 0.97 | 1.15 | 1.08 | 0.52 |
| 3 | 12.428 | Ethylene glycol diacetate | 0.36 | 0.45 | 0.53 | 0.51 | 0.32 |
| 4 | 13.016 | 1-(1,3-dioxolan-2-yl) acetone | 0.35 | 0.41 | 0.53 | 0.48 | 0.33 |
| 5 | 13.258 | 4-cyclopentene-1,3-d ione | 0.36 | 0.45 | 0.51 | 0.43 | 0.34 |
| 6 | 14.240 | Methylcyclopentenol one | 0.31 | 0.40 | 0.46 | 0.42 | 0.32 |
| 7 | 14.406 | Nicotine | 1.62 | 1.92 | 2.36 | 2.14 | 1.15 |
| 8 | 14.446 | 2-acetylfuran | 0.21 | 0.27 | 0.30 | 0.26 | 0.18 |
| 9 | 14.646 | 2(5H)-furanone | 0.29 | 0.32 | 0.42 | 0.40 | 0.31 |
| 10 | 16.934 | 5-methylfurfural | 1.08 | 1.30 | 1.60 | 1.53 | 0.75 |
| 11 | 17.051 | 3-methyl-2-cyclopent en-1-one | 0.65 | 0.70 | 0.94 | 0.94 | 0.38 |
| 12 | 20.257 | Methylcyclopentenol one | 1.15 | 1.43 | 1.71 | 1.69 | 0.87 |
| 13 | 20.545 | Benzyl alcohol | 0.33 | 0.38 | 0.48 | 0.48 | 0.25 |
| 14 | 20.745 | 2,3-dimethyl-2-cyclo pentenone | 0.84 | 1.00 | 1.25 | 1.07 | 0.62 |
| 15 | 24.792 | Ethylcyclopentenolo ne | 0.39 | 0.40 | 0.54 | 0.47 | 0.27 |
| 16 | 30.262 | 5-hydroxymethylfurf ural | 0.90 | 1.07 | 1.30 | 1.18 | 0.69 |
| 17 | 37.938 | Vanillin | 0.50 | 0.54 | 0.73 | 0.71 | 0.48 |
| 18 | 45.367 | Megastigmatrienone A | 0.75 | 0.89 | 1.03 | 1.03 | 0.67 |
| 19 | 45.820 | 2,4,4-trimethylpentan e-1,3-diyl bis(2-methylpropiona te) | 0.41 | 0.50 | 0.58 | 0.50 | 0.18 |
| 20 | 56.972 | Farnesol | 0.34 | 0.42 | 0.51 | 0.43 | 0.34 |
| 21 | 58.684 | Phthalic acid 1-butyl 2-isobutyl ester | 0.52 | 0.66 | 0.77 | 0.73 | 0.41 |
| 22 | 59.096 | Scopoletin | 0.41 | 0.58 | 0.61 | 0.60 | 0.38 |
| 23 | 64.684 | Tributyl prop-1 -ene-1 ,2,3 -trie arboxylate | 0.42 | 0.59 | 0.60 | 0.60 | 0.35 |
| Total amount | | | 13.73 | 16.50 | 19.99 | 18.72 | 10.76 |

### Example 4

A method for preparing a tar extract from a discarded cigarette butt included the following steps:
(1) pretreating of the discarded cigarette butt: outer wrapping paper of the discarded cigarette butt was removed, and a tow was cut into small segments with a length of less than 1 cm;
(2) 100 g of the pretreated discarded cigarette butt was added to 500 ml of anhydrous ethanol, and microwave radiation was carried out with a microwave-assisted extraction power of 40 W for 5 min to obtain an extraction solution;
(3) the extraction solution was centrifuged at 500 r/min for 3 min, the supernatant was allowed to pass through a silica gel column, elution was carried out by using a mixed solution of petroleum ether and ethyl acetate (a volume ratio of petroleum ether to ethyl acetate was 2: 1) as a mobile phase, and the resulting elution fraction was collected; and
(4) vacuum distillation was carried out on the elution fraction at 30°C under a vacuum pressure of 5 mmH, and then vacuum drying was carried out at 100°C to obtain the tar extract.

### Example 5

A method for preparing a tar extract from a discarded cigarette butt included the following steps:
(1) pretreating of the discarded cigarette butt: outer wrapping paper of the discarded cigarette butt was removed, and a tow was cut into small segments with a length of less than 1 cm;
(2) 100 g of the pretreated discarded cigarette butt was added to 3 L of anhydrous ethanol, and microwave radiation was carried out with a microwave-assisted extraction power of 400 W for 5 min to obtain an extraction solution;
(3) the extraction solution was centrifuged at 2000 r/min for 1 min, the supernatant was allowed to pass through a silica gel column, elution was carried out by using a mixed solution of petroleum ether and ethyl acetate (a volume ratio of petroleum ether to ethyl acetate was 30:1) as a mobile phase, and the resulting elution fraction was collected; and
(4) vacuum distillation was carried out on the elution fraction at 50°C under a vacuum pressure of 0.1 mmH, and then vacuum drying was carried out at 150°C to obtain the tar extract.

### Comparative Example 1

This comparative example was different from Example 5 in that: (3) the supernatant was allowed to pass through a silica gel column, elution was carried out by using a mixed solution of petroleum ether and ethyl acetate (a volume ratio of petroleum ether to ethyl acetate was 30:1) as a mobile phase, and the resulting elution fraction was collected; and (4) the elution fraction was centrifuged at 500 r/min for 3 min, vacuum distillation was carried out on the supernatant at 50°C under a vacuum pressure of 0.1 mmH, and then vacuum drying was carried out at 120°C to obtain the tar extract. The rest were the same as the steps in the method in Example 5.

### Comparative Example 2

This comparative example was different from Example 5 in that: (3) the extraction solution was centrifuged at 2000 r/min for 1 min, the supernatant was allowed to pass through a silica gel column, elution was carried out by using a mixed solution of petroleum ether and ethyl acetate (a volume ratio of petroleum ether to ethyl acetate was 1:1) as a mobile phase, and the resulting elution fraction was collected. The rest were the same as the steps in the method in Example 5.

### Comparative Example 3

This comparative example was different from Example 5 in that: (3) the extraction solution was centrifuged at 2000 r/min for 1 min, the supernatant was allowed to pass through a silica gel column, elution was carried out by using a mixed solution of petroleum ether and ethyl acetate (a volume ratio of petroleum ether to ethyl acetate was 40:1) as a mobile phase, and the resulting elution fraction was collected. The rest were the same as the steps in the method in Example 5.

The tar extracts prepared in Examples 4-5 and Comparative Examples 1-3 were tested for their types and contents thereof. The test results showed that the types and contents of the tar extracts prepared in Examples 4-5 were greater than those of the tar extracts prepared in Comparative Examples 1-3.

The tar extracts prepared in Examples 4-5 and Comparative Examples 1-3 were respectively added to a cigarette tobacco blend in an amount of 3% of the weight of the cigarette tobacco blend to prepare a cigarette sample 1#, a cigarette sample 2#, a cigarette sample D1#, a cigarette sample D2# and a cigarette sample D3#. After the cigarette samples were equilibrated in a constant-temperature and constant-humidity environment of (20±1)°C and (60±3)%RH for 24 h, 20 or more smoking evaluators were organized to perform sensory evaluation on the cigarette samples with reference to Tobacco in processing-Sensory evaluation methods (YC/T 415-2011). The evaluation results are shown in Table 4.

**Table 4 Sensory evaluation results**

| Evaluation sample | | Cigarette sample 1# | Cigarette sample 2# | Cigarette sample D1# | Cigarette sample D2# | Cigarette sample D3# |
|---|---|---|---|---|---|---|
| Aroma characteristi cs | Quality of aroma | 6.00 | 6.25 | 6.00 | 6.00 | 6.00 |
| | Quantity of aroma | 6.25 | 6.50 | 6.25 | 6.00 | 6.00 |
| | Offensive odor | 6.20 | 6.25 | 6.20 | 6.20 | 6.20 |
| | Volatility | 6.00 | 6.00 | 6.00 | 6.00 | 6.00 |
| Smoke characteristi cs | Concentratio n | 6.25 | 6.25 | 6.00 | 6.25 | 6.25 |
| | Strength | 6.00 | 6.00 | 6.00 | 6.00 | 6.00 |
| | Harshness | 6.50 | 6.25 | 6.20 | 6.25 | 6.00 |
| | Agglomeratio n | 5.50 | 5.50 | 5.50 | 5.50 | 5.50 |
| Taste characteristi cs | Irritancy | 6.25 | 6.25 | 6.25 | 6.25 | 6.25 |
| | Dry feeling | 6.00 | 6.00 | 6.00 | 6.00 | 6.00 |
| | Clean degree | 6.00 | 5.75 | 5.75 | 5.75 | 5.75 |
| | Sweet aftertaste | 5.00 | 5.00 | 5.00 | 5.00 | 5.00 |
| | | | | | | |

As can be seen from the results in Table 4, compared with the comparative examples, after the tar extracts prepared in the examples of the present invention were added to the cigarette, the aroma characteristics, the smoke characteristics and the taste characteristics of the cigarette were improved to different degrees. Thus, the smoke, aroma and taste characteristics of the low-end cigarette could be effectively improved, and the sensory quality of the low-end cigarette was improved.

The above are only examples of the present application, and the protection scope of the present application is not limited by these specific examples, but is determined by the claims of the present application.

## Claims

1. Use of tar extract from a discarded cigarette butt as a raw material of a flavor, or in the preparation of a flavor, or in the preparation of a cigarette, wherein the tar extract is obtained by a method of preparing the tar extract from the discarded cigarette butt comprising the following steps:
(1) adding the discarded cigarette butt to an extraction solvent, and carrying out microwave-assisted extraction to obtain an extraction solution; and
(2) centrifuging the extraction solution, carrying out silica gel column chromatography on the supernatant, carrying out elution by using a mixed solution of petroleum ether and ethyl
acetate as a mobile phase, and collecting the resulted elution fraction to obtain the tar extract.

2. The use according to claim 1, wherein in the step (1), the extraction solvent is at least one selected from methanol, anhydrous ethanol, petroleum ether, n-hexane, acetone, dichloromethane and ethyl acetate.

3. The use according to claim 1, wherein in the step (1), a ratio of the discarded cigarette butt to the extraction solvent is 1 g : 5-30 mL, a microwave power is 40-400 W, and the microwave-assisted extraction is carried out for 3-10 min.

4. The use according to claim 1, wherein in the step (2), a volume ratio of petroleum ether to ethyl acetate in the mixed solution of petroleum ether and ethyl acetate is 2-30 : 1; and
preferably, the centrifuging is carried out at a revolution speed of 500-2000 r/min for 1-3min.

5. The use according to claim 1, wherein the method further comprises a steps of carrying out vacuum distillation on the collected elution fraction, and carrying out vacuum drying; wherein
preferably, the vacuum distillation is carried out at a temperature of 30-50°C under a pressure of 0.1-5 mmH; and the drying is carried out at a temperature of 100-150°C.

6. The use according to claim 1, wherein the method further comprises a step of pretreating the discarded cigarette butt; wherein
preferably, the pretreating specifically comprises: tearing off an outer wrapping paper from the discarded cigarette butt, and cutting a tow into small segments less than 1 cm long.

7. The use according to claim1 when in the preparation of a cigarette, wherein the cigarette is a low-end cigarette;
preferably, the tar extract is added to a filter or a cigarette tobacco blend of the low-end
cigarette; and
preferably, the amount of the tar extract added is 2-5% of the weight of the cigarette tobacco blend.

## Patentansprüche

1. Verwendung von Teerextrakt aus einem weggeworfenen Zigarettenstummel als Rohmaterial für einen Geschmack oder bei der Herstellung eines Geschmacks oder bei der Herstellung einer Zigarette, wobei der Teerextrakt durch ein Verfahren zum Herstellen des Teerextrakts aus dem weggeworfenen Zigarettenstummel erhalten wird, umfassend die folgenden Schritte:
(1) Hinzufügen des weggeworfenen Zigarettenstummels zu einem Extraktionslösungsmittel und Durchführen von mikrowellengestützter Extraktion, um eine Extraktionslösung zu erhalten; und
(2) Zentrifugieren der Extraktionslösung, Durchführen von Kieselgel-Säulenchromatographie an dem Überstand, Durchführen von Elution durch Verwenden einer gemischten Lösung aus Petrolether und Ethylactetat als mobile Phase und Sammeln der resultierenden Elutionsfraktion, um den Teerextrakt zu erhalten.

2. Verwendung nach Anspruch 1, wobei in Schritt (1) das Extraktionslösungsmittel zumindest eines ausgewählt aus Methanol, wasserfreiem Ethanol, Petrolether, n-Hexan, Aceton, Dichlormethan und Ethylacetat ist.

3. Verwendung nach Anspruch 1, wobei in dem Schritt (1) ein Verhältnis des weggeworfenen Zigarettenstummels zu dem Extraktionslösungsmittel 1 g : 5-30 ml ist, eine Mikrowellenleistung 40-400 W ist und die mikrowellengestützte Extraktion 3-10 min. durchgeführt wird.

4. Verwendung nach Anspruch 1, wobei in dem Schritt (2) ein Volumenverhältnis von Petrolether zu Ethylacetat in der gemischten Lösung aus Petrolether und Ethylacetat 2-30 : 1 ist; und
bevorzugt das Zentrifugieren bei einer Drehzahl von 500-2000 U/min 1-3 min. durchgeführt wird.

5. Verwendung nach Anspruch 1, wobei das Verfahren ferner einen Schritt des Durchführens von Vakuumdestillation an der gesammelten Elutionsfraktion und Durchführens von Vakuumtrocknung umfasst; wobei
bevorzugt die Vakuumdestillation bei einer Temperatur von 30-50 °C unter einem Druck von 0,1-5 mmH durchgeführt wird; und das Trocknen bei einer Temperatur von 100-150 °C durchgeführt wird.

6. Verwendung nach Anspruch 1, wobei das Verfahren ferner einen Schritt des Vorbehandelns des weggeworfenen Zigarettenstummels umfasst; wobei
bevorzugt das Vorbehandeln spezifisch Folgendes umfasst: Abreißen eines äußeren Wickelpapiers von dem weggeworfenen Zigarettenstummel und Schneiden eines Strangs in kleine Segmente von weniger als 1 cm Länge.

7. Verwendung nach Anspruch 1 bei der Herstellung einer Zigarette, wobei die Zigarette eine Low-End-Zigarette ist;
bevorzugt der Teerextrakt einem Filter oder einer Zigarettentabakmischung der Low-End-Zigarette hinzugefügt wird; und
bevorzugt die Menge des hinzugefügten Teerextrakts 2-5 % des Gewichts der Zigarettentabakmischung ist.

## Revendications

1. Utilisation d'un extrait de goudron provenant d'un mégot de cigarette mis au rebut en tant que matière première d'un arôme, ou dans la préparation d'un arôme, ou dans la préparation d'une cigarette, ledit extrait de goudron étant obtenu par un procédé de préparation de l'extrait de goudron à partir du mégot de cigarette mis au rebut comprenant les étapes suivantes :
(1) l'ajout du mégot de cigarette mis au rebut à un solvant d'extraction, et la réalisation d'une extraction assistée par micro-ondes de manière à obtenir une solution d'extraction ; et
(2) la centrifugation de la solution d'extraction, la réalisation d'une chromatographie sur colonne de gel de silice sur le surnageant, la réalisation d'une élution en utilisant une solution mixte d'éther de pétrole et d'acétate d'éthyle en tant que phase mobile, et la collecte de la fraction d'élution résultante de manière à obtenir l'extrait de goudron.

2. Utilisation selon la revendication 1, dans l'étape (1), ledit solvant d'extraction étant au moins un solvant choisi parmi le méthanol, l'éthanol anhydre, l'éther de pétrole, le n-hexane, l'acétone, le dichlorométhane et l'acétate d'éthyle.

3. Utilisation selon la revendication 1, dans l'étape (1), un rapport du mégot de cigarette mis au rebut au solvant d'extraction étant de 1 g:5 à 30 ml, la puissance des micro-ondes étant de 40 à 400 W et ladite extraction assistée par micro-ondes étant réalisée pendant 3 à 10 min.

4. Utilisation selon la revendication 1, dans l'étape (2), un rapport volumique de l'éther de pétrole à l'acétate d'éthyle dans la solution mixte d'éther de pétrole et d'acétate d'éthyle étant de 2 à 30:1 ; et
de préférence, ladite centrifugation étant réalisée à une vitesse de rotation de 500 à 2000 tr/min pendant 1 à 3 minutes.

5. Utilisation selon la revendication 1, ledit procédé comprenant en outre une étape de réalisation d'une distillation sous vide sur la fraction d'élution collectée et la réalisation d'un séchage sous vide ;
de préférence, ladite distillation sous vide étant réalisée à une température de 30 à 50°C sous une pression de 0,1 à 5 mmH; et ledit séchage étant réalisé à une température de 100 à 150°C.

6. Utilisation selon la revendication 1, ledit procédé comprenant en outre une étape de prétraitement du mégot de cigarette mis au rebut ;
de préférence, ledit prétraitement comprenant spécifiquement : le déchirement d'un papier d'emballage extérieur du mégot de cigarette mis au rebut, et la découpe d'une étoupe en petits segments de moins de 1 cm de long.

7. Utilisation selon la revendication 1 lors de la préparation d'une cigarette, ladite cigarette étant une cigarette bas de gamme ;
de préférence, ledit extrait de goudron étant ajouté à un filtre ou à un mélange de tabac à cigarettes de la cigarette bas de gamme ; et
de préférence, la quantité d'extrait de goudron ajoutée représentant de 2 à 5 % du poids du mélange de tabac à cigarettes.
